# EUROPEAN PATENT APPLICATION

(11) **EP 1 094 020 A1**
(43) Date of publication of application: **25.04.2001**
(21) Application number: 99308251.0
(22) Date of filing: 19.10.1999
(51) Int. Cl.: B65G 51/02, B65B 35/28, B65B 61/28

(54) **Article handling**

(71) Applicant: UNILEVER PLC, London EC4P 4BQ (GB)
(72) Inventor: Jeremy Baker, Blakelands Milton Keynes MK14 5LU (GB)
(74) Representative: Evans, Jacqueline Gail Victoria

(57) **Abstract**

A method and apparatus for handling a stream of discrete articles comprises a conduit at the entry end of which is an annular jet pump (2) producing an accelerating gas flow along the conduit. The articles are discharged from the conduit through a pivotable chute (10). Upstream of the chute, a suction chamber (30) draws off most of the flow from the jet pump so that any flow through the chute occurs at a much lower speed. The acceleration of the articles in the conduit by the pump makes it easier to control the transfer of a continuous stream of articles to a chosen location. Because control is exercised by the pumped flow and does not require mechanical handling elements, relatively delicate articles can be batched safely and the subsequent reduction of the flow rate ensures the flow does not have a disturbing effect on the articles as they leave the chute.

## Description

This invention relates to the handling of a series of discrete articles, eg. to control the movement of the articles and to collect the articles in batches. The invention is particularly concerned with the handling of a series of articles being manufactured at high production rates.

If successive articles flow in a continuous stream at a rate of several articles per second, it can be difficult to batch them in predetermined quantities, eg. for weighing and/or packaging, as they emerge from the production process. This problem is particularly accentuated if fragile articles that can be easily damaged by mechanical handling devices are to be moved at relatively high speeds.

EP 866005A describes a handling apparatus in which packets emerging in a continuous stream from a form-fill process are deposited into a downwardly extending conduit which has a suction connection at its lower end to generate downward air flow through the conduit accelerating the fall of the articles. The air flow thus assists separation of the individual articles downward. Downward direction of the air flow is ensured by sealing the conduit immediately below the suction connection. To take the articles out of the conduit the seal is formed by a pair of counter-rotating sealing rollers which have yielding surfaces pressing together but between which the articles are gripped and are expelled from the conduit as the rollers rotate. If the surfaces are made of a suitably soft material, many form-fill packets of paper-based material such as infusion packets can pass between them without damage. However, for more delicate articles, eg. infusion packets which have external attachments such as tags and threads on their outer surfaces, there is a risk of damage, even if the rollers have soft yielding coverings.

According to one aspect of the present invention, there is provided apparatus for controlling the movement of a flow of articles through a conduit comprising means for injecting a gas into an entry region of the conduit to generate a gas flow accelerating the movement of the articles through the conduit, and suction means communicating with the conduit at a location remote from the gas injection means to draw off at least a part of said injected flow away from the accelerated articles.

With the use of gas injection and suction means in series, the conduit can be arranged as an open passage for the articles extending from said injection means to the exit end of the conduit. The acceleration of the articles can thus be generated without the use of mechanical handling devices. Furthermore, even if this requires high air flow speeds, the gas suction means can ensure that the air flow does not have a disturbing effect on the articles leaving the conduit.

Preferably, the conduit length between said entry and downstream regions is several times the mean cross-sectional dimension of the conduit, eg. at least four times a mean diameter of the conduit cross-section. It will generally be desirable, but not essential, to orient the conduit vertically, or at least sloping downwards steeply from the entry end so that gravity forces and air flow forces complement each other, but this is not essential.

The apparatus may further comprise at least one open receptacle below the conduit for receiving exiting articles. If sufficient of the accelerating gas flow is extracted from the path followed by the articles before they exit into said receptacle, it can be ensured that the articles will settle safely into the receptacle by gravity, despite the fact that their speed of descent has been increased by the gas flow further upstream, even if it is relatively shallow.

According to a more particular aspect of the invention, apparatus is provided for controlling the movement of a flow of discrete articles, comprising a downwardly extending conduit having upper and lower sections in series, means for injecting a pumped flow of gas into an entry region of said upper section to flow towards said lower section for accelerating the flow of articles through the conduit, suction means between the upper and lower sections to draw off at least a part of said pumped gas flow, and at least an exit end of said lower section being displaceable to direct the flow of articles from said downstream section to alternative locations.

In this manner, a stream of articles rapidly following each other can be deposited as batches in successive receptacles arranged adjacent each other without interruption of the flow of articles.
Preferably, said displaceability is achieved by pivoting the downstream section of the conduit.

The gas injecting means in apparatus according to the invention can conveniently be in the form of an annular jet pump directing the gas flow into the conduit through a peripheral region at its entry end, so as to draw the articles into the entry region without mechanical contact.

Preferably, a branch outlet is provided from the conduit between said gas injection means and the suction means and a diversion device is operable in the conduit to direct articles into said branch outlet.

According to a further aspect of the invention, a method is provided for controlling the movement of the flow of articles through a conduit comprising injecting a gas flow into an upstream region of the conduit to flow towards a downstream region thereof for accelerating the flow of articles along the conduit, and drawing off at least a part of the injected gas flow at a region spaced downstream of said upstream region but preceding an end exit for the articles from the conduit, whereby to maintain a lower gas flow speed at said exit than in the extent between said upstream and downstream regions.

The gas flow is advantageously injected as an annular stream along the conduit inner wall at or adjacent the entry to the conduit, so as to induce a flow from the surrounding atmosphere, thereby producing an increased gas mass flow through the conduit.

Preferably, a part of the injected flow is allowed to continue through said downstream region to the end exit, but at a substantially reduced velocity.

An embodiment of the invention will be described by way of example with reference to the accompanying drawings, in which:
Fig. 1 is a front view of lower part of an apparatus for producing infusion packets, such as tea bags, by a form-fill process and having handling apparatus according to the invention for batching the completed bags, and
Fig. 2 is a sectional view of the handling apparatus to a larger scale but in the same direction as the view in Fig. 1.

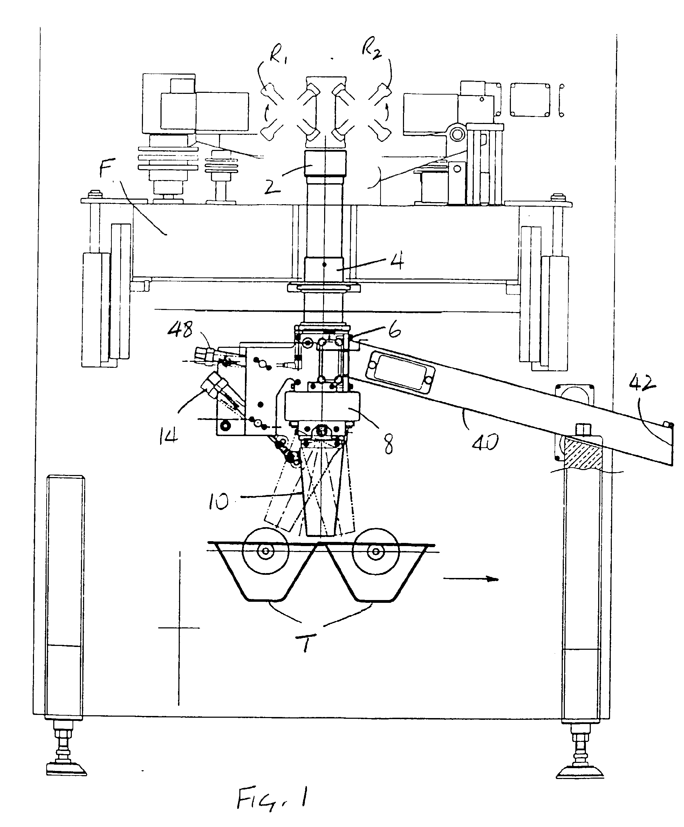

Fig. 1 shows handling apparatus according to the invention placed at the outlet from a form-fill machine, illustrated only fragmentarily, for directing filled packets produced by the machine into a series of troughs or trays T only two of which are shown, linked together to form an endless conveyor. Of the apparatus for the form-fill process, Fig. 1 shows only a pair of counter-rotating cutting rotors R₁,R₂ at the lower, exit end of the apparatus which separate individual filled packets formed from a descending, compartmented tube of packet material (not shown). The rotors may also make transverse seals across the tube to compartment it at the same time as they cut the tube at the seals to complete the packets, but in either case the rotors deliver a series of discrete packets to the upper, entry end of the handling apparatus.

The illustrated troughs form part of a run of the trough conveyor below the lower, outlet end of the handling apparatus, moving in the arrowed direction from left to right as shown in Fig. 1. Predetermined quantities of the packets are deposited in each trough by the handling apparatus and are carried by the conveyor to a packing station (not shown) where they are placed in cartons or other outer packaging.

The handling apparatus, supported in a structural frame F of the form-fill machine, comprises a conduit having a top entry section which is formed by an annular jet pump 2, such as a Ringjet Airmover manufactured by O N Beck & Company Ltd of London. The entry section is followed in series by an elongate, circular cross-section acceleration section 4, a square cross-section control section 6, and a tapering suction section 8 also having a square cross-section. The successive sections form, with a square cross-section chute 10 extending from the lower end of the suction section 8, a continuous open passage. The chute 10 is mounted at its upper end on a pivot 12 about which it is displaceable by a ram 14, in the direction of the conveyor run. The lower exit end of the chute 10 extends close to the conveyor troughs T.

The jet pump 2 comprises an annular chamber 22 which is fed with high pressure air from a pump (not shown). The chamber has a narrow annular exit nozzle 24 at its upper end directing the pressure flow inwardly over a curved lower wall 26 of the nozzle to generate a Coanda effect in which the air tends to cling to the curved lower wall and continues downwards along the conduit. The forced flow through the annular nozzle 24 induces an additional downwards flow of air from the top opening of the conduit resulting in a considerably larger volume flow down the conduit at a lower positive pressure.

One effect of the air flow produced by the jet pump 2 is to apply a downwards force to the packets while they are still in the zone of action of the counter-rotating rotors R₁,R₂. Initial separation of the individual packets is therefore assisted, should the rotors not completely sever each packet, or, if the severing and/or sealing of the packets relies on the application of heat through the rotors to a thermoplastic packet material, should there be any tendency of the packets to adhere to the heated faces. A major effect of air flow, however, is to accelerate the fall of the packets through the conduit, so introducing a separation distance between successive packets in the acceleration section. This is significant because the apparatus is intended to handle a stream of packets being delivered at a rate of several packets per second. The acceleration of the articles by the air flow continues through the suction section 8, ie. over a total distance from the jet pump nozzle some eight times the mean conduit diameter.

The frusto-conical suction section 8 of the passage has a convergent nozzle 28 increasing the accelerating effect of the air flow. The lower exit end of the nozzle is open to a suction chamber 30 surrounding the nozzle. Vacuum pumping means (not shown) draw off at least a greater part of the air flow through the nozzle 28 and also contribute to increasing the rate of flow. Downstream of the suction chamber, in the chute 10, there is only a relatively slow rate of air movement. Preferably, however some of the downwards airflow is continued through the chute to ensure the effectiveness of the suction chamber is not diminished by a back flow in the chute.

As the troughs T of the conveyor are driven past the handling apparatus, the chute orientation is controlled by the ram 14 to locate its exit end over a chosen trough. When the required number of packets has been deposited in one trough, the chute is pivoted rearwards relative to the conveyor travel direction to direct further packets into the succeeding trough. The increased separation of the packets produced by the accelerating air flow assists the coordination of the chute movement with the flow of articles so that the flow can continue uninterrupted during switching.

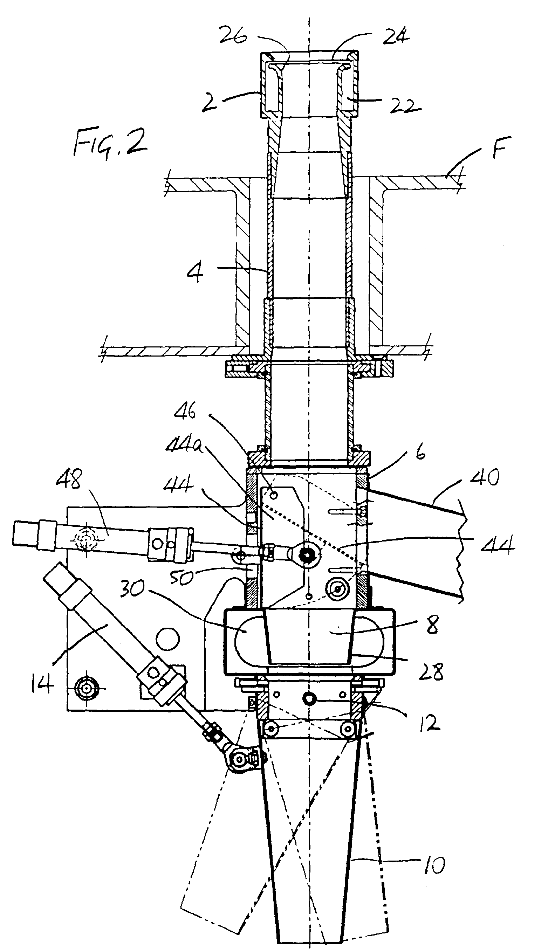

Fig. 2 shows the limits of movement of the chute 10. On switching to a succeeding trough the chute goes to the left-hand position shown and, as the conveyor advances and the trough below the chute is being filled, the chute is progressively pivoted rightwards to maintain it over the trough. In its right-hand end position the chute is shown in relation to the conveyor at an extreme position from which it will be switched clockwise to a succeeding trough, although in practice it may be switched earlier if the required number of packets has been deposited in the operative trough.

From the control section 6, a branch conduit 40 extends downwards away from the main conduit. The outlet end of the branch conduit is normally closed by a flexible cover 42. In the main conduit, opposite the branch conduit entry, is a diverter valve 44 controlled by a ram 48. In the normal, rest position shown in full lines, the valve 44 lies against the walls of the control section 6, leaving the main air passage unobstructed. It is pivotable to the broken-line position shown by extension of the ram 48 through a side opening 50 in the control section wall normally sealed by the valve 44. (Fig. 2 shows the ram 44 only in its extended position.) The valve then closes off the main passage and directs packets and air flow into the branch conduit 40. Activation of the diverter valve 44 can thus prevent packets reaching the conveyor in the event of malfunction. It will be noted that packets directed to the branch conduit will be subjected to the accelerating air flow both in the main conduit and the branch conduit.

The described apparatus is able to handle a stream of packets being produced in rapid succession, eg. at a rate of several hundred packets per minute. It is able to facilitate control of the stream by accelerating the packets so as to introduce a separation distance between successive packets, and simultaneously to help ensure that initial separation of the individual packets occurs despite minor faults in the packet-forming process.

A further feature of the apparatus is its ability to handle relatively fragile articles because the packets fall through an open passage in a cushioning air flow as they travel from the form-fill machine to the conveyor. Neither the separation of the packets nor their acceleration require them to be manipulated by mechanical handling devices. It is thus possible to handle safely such articles as infusion packets which have suspension tags detachably secured to their outer faces, without risk of inadvertent detachment of the tags.

It is also notable that the apparatus is able to deal with relatively low density articles such as tea bags. It is of course possible to obtain a greater accelerating effect from the air flow from the jet pump if the size:weight ratio of the articles is low, but there is then the problem that they must finally be deposited safely and securely when they leave the handling apparatus. In the example described, the flow generated by the jet pump is an obstacle to that result because if it were allowed to escape through the chute, it could blow the articles from the troughs. However, by removing at least the greater part of the air flow further upstream, there is little or no disturbing flow from the chute that would hinder the articles being securely deposited in the troughs.

It will be understood that the described apparatus can be modified in many ways within the scope of the invention. For example, although the downward path of the packets means that gravity complements the driving force of the air flow, the conduit can in principle be oriented in any direction.

## Claims

1. Apparatus for controlling the movement of a flow of articles through a conduit comprising means for injecting a gas into an entry region of the conduit to generate a gas flow accelerating the movement of the articles through the conduit, and suction means communicating with the conduit at a location remote from the gas injection means to draw off at least a part of said injected flow away from the accelerated articles.

2. Apparatus according to claim 1 wherein the conduit length between said entry and downstream regions is several times the mean cross-sectional dimension of the conduit.

3. Apparatus according to claim 1 or claim 2 wherein said flow draw-off means are spaced upstream from an exit end of the conduit.

4. Apparatus according to any one of claims 1 to 3 further comprising at least one open receptacle below the conduit for receiving exiting articles.

5. Apparatus for controlling the movement of a flow of discrete articles comprising a downwardly extending conduit having upper and lower sections in series, means for injecting a pumped flow of gas into an entry region of said upper section to flow towards said lower section for accelerating the flow of articles through the conduit, suction means between the upper and lower sections to draw off at least a part of said pumped gas flow, and at least an exit end of said lower section being displaceable to direct the flow of articles from said lower section to alternative locations.

6. Apparatus according to claim 5 wherein the lower section is pivotably displaceable.

7. Apparatus according to any one of the preceding claims wherein the gas injection means comprises an annular jet pump directing the gas flow through the peripheral region of the conduit, so as to draw the articles into the conduit without mechanical contact.

8. Apparatus according to any one of the preceding claims wherein the gas suction means comprises a suction chamber extending peripherally around the conduit.

9. Apparatus according to claim 8 wherein the conduit comprises a convergent nozzle open to and surrounded by said annular suction chamber.

10. Apparatus according to any one of the preceding claims wherein a branch outlet is provided from the conduit between said gas injection means and the suction means and a diversion device is operable in the conduit to direct articles into said branch outlet.

11. A method of controlling the movement of the flow of articles through a conduit comprising injecting a gas flow into an upstream region of the conduit to flow towards a downstream region thereof for accelerating the flow of articles along the conduit, and drawing off at least a part of the injected gas flow at a region spaced downstream of said upstream region but preceding an end exit for the articles from the conduit, whereby to maintain a lower gas flow speed at said exit than in the extent between said upstream and downstream regions.

12. A method according to claim 11 wherein the gas flow is injected as a stream close to the inner wall of the conduit to induce additional flow into the conduit from the surrounding atmosphere.

13. A method according to claim 11 or claim 12 wherein a part of the injected flow is allowed to continue through said downstream region to the end exit, but at a substantially reduced velocity.
